# EUROPÄISCHE PATENTSCHRIFT

(11) **EP 1 157 443 B1**
(45) Veröffentlichungstag und Bekanntmachung des Hinweises auf die Patenterteilung: **15.10.2008**
(21) Anmeldenummer: 00988654.0
(22) Anmeldetag: 25.11.2000
(51) Int. Cl.: H01Q 1/32, H01Q 19/06, H01Q 3/14, H01Q 3/26

(54) **VORRICHTUNG ZUM EINSTELLEN EINES RICHTSTRAHLSYSTEMS**
DEVICE FOR ADJUSTING A BEAM SYSTEM
DISPOSITIF POUR REGLER UN SYSTEME A FAISCEAUX

(30) Priorität: 21.12.1999 DE 19961774
(43) Veröffentlichungstag der Anmeldung: 28.11.2001
(73) Patentinhaber: ROBERT BOSCH GMBH, 70442 Stuttgart (DE)
(72) Erfinder: WINTER, Klaus, 71701 Schwieberdingen (DE); MAYER, Hermann, 71665 Vaihingen (DE); LUCAS, Bernhard, 74354 Besigheim (DE); BEEZ, Thomas, 74189 Weinsberg (DE); OLBRICH, Herbert, 71277 Rutesheim (DE)
(74) Vertreter: Hörschler, Wolfram Johannes
(86) Internationale Anmeldenummer: PCT/DE2000/004189
(87) Internationale Veröffentlichungsnummer: WO 2001/047062

(56) Entgegenhaltungen:
- EP-A- 0 805 360
- WO-A-98/40761
- US-A- 5 926 127

## Beschreibung

Die vorliegende Erfindung betrifft eine Vorrichtung zum Einstellen eines Richtstrahlsystems nach dem Oberbegriff des Anspruchs 1. Derartige Vorrichtungen finden Anwendung insbesondere bei Radarsystemen in Kraftfahrzeugen, die der Fahrerunterstützung, etwa durch Detektion von Objekten, Entfernungs-, Richtungsbestimmung- und/oder Geschwindigkeitsmessung dienen.

Um ein Radarsystem in einem Kraftfahrzeug korrekt auf die Straße einzustellen, ist aus DE 42 01 214 C1 eine Vorrichtung bekannt, bei der - nach Art der Justierung eines Autoscheinwerfers - die Orientierung des gesamten Radarsystems bezüglich des Kraftfahrzeugs verändert wird.

Soll hingegen die ausgesandte Radarstrahlung eine gewünschte Charakteristik (Antennenkeule) erhalten, ist es bei einer derartigen Anwendung notwendig, Strahlquelle und fokussierendes Mittel geometrisch aufeinander auszurichten. Hierzu sind bereits verschiedene Justiermechanismen bekannt. Aus DE 690 17 043 T2 ist ein Radarsystem bekannt, bei welchem die Strahlquelle und die Antennenlinse jeweils an den Enden zweier koaxial zueinander angeordneter Röhren angebracht sind, deren axialer Abstand veränderbar ist. Durch axiale Verschiebung der Röhren zueinander - entlang der geometrischen Symmetrieachse der Antennenlinse - läßt sich der Öffnungswinkel der Antennenkeule verändern. DE 196 42 810 C1 offenbart eine Justiereinrichtung, bei welcher sich die Strahlquelle in einer Ebene senkrecht zur Strahlungsachse relativ zur Antennenlinse bewegen läßt. Die Strahlquelle befindet sich hierbei auf einer Basisplatte, die durch zwei keilförmige Schieber, welche jeweils durch eine Gewindestange bewegt werden können, verschiebbar ist. Hierdurch wird eine manuelle Justierung von Strahlquelle und Antennenlinse in eine gewünschte Hauptstrahlrichtung ermöglicht. Gemäß einer anderen dort offenbarten Variante lässt sich die Strahlquelle bezüglich der Strahlungsachse in drei Richtungen kippen. Hierzu ist die Strahlquelle auf der ebenen Fläche einer kugelabschnittsförmigen Basis angeordnet, wobei sich die Basis durch zwei Schrauben, die um 90° versetzt gegeneinander auf dem Umfang der Basis angeordnet sind und gegen jeweils eine gegenüberliegende Feder wirken, verdrehen lässt.

Das Patent US 5,926,127 offenbart ein Fahrzeug-Radarmodul mit zwei parallele Stellgliedern, die bewegt werden, um den Abstand eines Transceiverelements zu einem Fokussierelement zu ändern. Durch die Struktur der Stellglieder ist keine Neigung des Fokussierelement zum Transceiverelement möglich.

Die Druckschrift WO 98/40791 beschreibt ein Satelliten-Empfangssystem mit einer Antenne, die in einem unveränderlichen Abstand zu einem Fokussierelement angeordnet ist. Das gesamte Empfangssystem mit Antenne und Fokussierelement ist mittels Schwenkglieder schwenkbar.

Die Druckschrift EP 0 805 360 A2 offenbart ein Radarverfahren mit feststehenden Antennenelementen, deren Phasenansteuerung zur Strahlrichtungsänderung verändert wird. Diese Druckschrift offenbart kein Fokussierelement mit veränderlichem Abstand zu einer Antenne.

Nachteilig an den genannten Justiereinrichtungen ist, dass sie keine gleichzeitige Positionsveränderung der Strahlquelle in Richtung der Strahlungsachse sowie Verdrehung der Strahlquelle bezüglich der Strahlungsachse gestatten, so dass eine gleichzeitige Schwenkung und Aufweitung des Radarstrahls nicht realisierbar ist. Dies schränkt die Einsatzmöglichkeiten des Radarsystems in einem Kraftfahrzeug beispielsweise bei der Abstandsmessung ein.

Die Erfindung wird durch eine Vorrichtung mit den Merkmalen gemäß den unabhängigen Ansprüchen beschrieben. Vorteilhafte Weiterbildungen sind in den abhängigen Ansprüchen definiert.

Die Erfindung ist mit einer Reihe von Vorteilen verbunden. So lässt sich die Strahlquelle relativ zur Linsenachse aufgrund der durch mindestens drei Stützelemente fixierten Basis frei bewegen. Es lassen sich eine gezielte Strahlschwenkung sowie eine gezielte Veränderung der Fokussierung zur Strahlaufweitung realisieren. Die Justierung bzw. Verstellung des Richtstrahlsystems lässt sich elektrisch ausführen. Somit kann die Antennencharakteristik, also der lokale Messbereich, während des Betriebs des Richtstrahlsystems verändert werden.

Die Erfindung wird anhand eines Ausführungsbeispiels in Verbindung mit der Zeichnung erläutert. Es zeigen :
- Fig. 1: einen Längsschnitt durch ein Richtstrahlsystem mit der erfindungsgemäßen Einstellvorrichtung;
- Fig. 2: eine Draufsicht auf die erfindungsgemäße Einstellvorrichtung;
- Fig. 3: eine Schwenkung der Basis bezüglich der geometrischen Symmetrieachse; und
- Fig. 4: eine Verschiebung der Basis in Richtung der geometrischen Symmetrieachse.

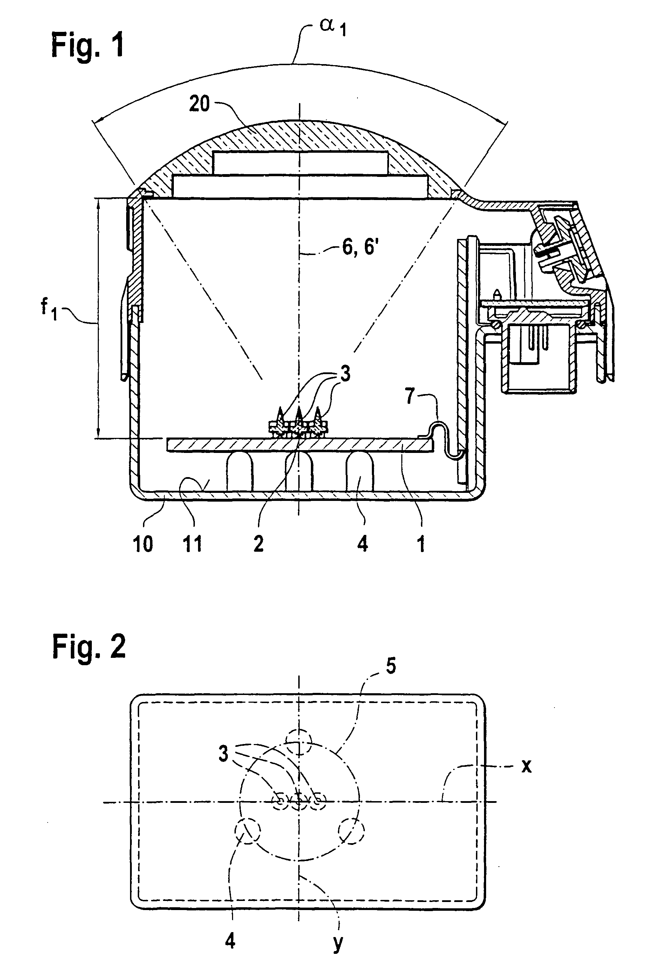

Im Richtstrahlsystem gemäß Fig. 1 ist eine Basis 1, welche eine oder mehrere Strahlquellen 2 sowie Vorfokussierungselemente 3 trägt, auf drei Stützelementen 4 auf einer Innenseite 11 eines Trägers 10, welcher das Gehäuse des Richtstrahlsystems bildet, befestigt. Die Stützelemente 4 sind selektiv und unabhängig voneinander in ihrer jeweiligen Länge veränderbar, so daß der Abstand und die Ausrichtung der Basis 1 im Verhältnis zu der Fokussierlinse 20 einstellbar ist. Durch die Anordnung der drei Stützelemente 4 auf einer Kreislinie 5 wird eine kardanische Lagerung der Basis 1 bezüglich des Trägers 10 und somit auch bezüglich der Fokuslinse 20 realisiert. Der Mittelpunkt des Kreises 5 liegt auf der geometrischen Symmetrieachse 6 der Fokussierlinse 20. Die elektrische Verbindung der Basis 1 mit der übrigen Elektronik des Richtstrahlsystems erfolgt über eine flexible Leitung 7. Die Stützelemente 4 sind von außerhalb des Trägers 10 elektronisch verstellbar. Die Stützelemente 4 sind durch Piezo-Elemente, elektrische Linearmotoren und/oder mittels Schrittmotoren angetriebene Zahnstangenelemente ausgebildet.

Figur 2 zeigt die Anordnung der Stützelemente 4 auf dem Kreis 5 auf der Rückseite der Basis 1.

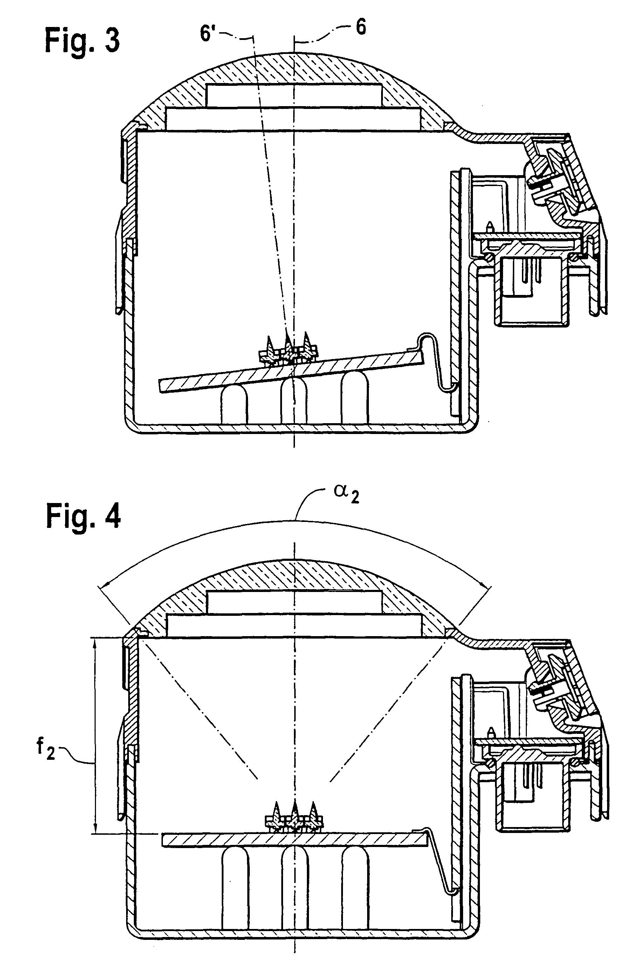

In einer Ausgangsstellung (vgl. Fig. 1) halten die Stützelemente 4 die Basis 1 mit den Strahlquellen 2 im Abstand von f₁ von der Antennenlinse 20, wodurch sich eine Strahlhalbwertsbreite bzw. einen Öffnungswinkel α₁ ergibt. Durch unterschiedliche Verlängerung oder Verkürzung der drei Stützelemente 4 kann die Basis 1 räumlich relativ zur Antennenlinsenachse 6 (geometrische Symmetrieachse) verschwenkt werden, z.B. um die Achse x-x, y-y oder um beide gleichzeitig (vgl. Fig. 3). Mit dieser Schwenkung ist ebenfalls eine Schwenkung des die Antennenlinse 20 durchtretenden Strahls verbunden, d.h. die Strahlachse 6' (bzw. Hauptstrahlrichtung) und die Antennenlinsenachse 6 weichen voneinander ab. Dieser Effekt kann beispielsweise zum Ausgleich der Montagetoleranzen des Richtstrahlsystems im Fahrzeug genutzt werden, d.h. zur Justierung, oder zum gezielten Abscannen eines gewissen Winkelbereichs zur Erweiterung des Detektionsbereichs des Richtstrahlsystems.

Durch gleiche und gleichgerichtete Längenänderung aller Stützelemente 4 kann die Fokussierung der Strahlquellen 2 gezielt verändert werden, vgl. Fig. 4. Durch Einstellung der Fokuslänge f₂ ergibt sich eine Aufweitung des Strahls auf eine Strahlhalbwertsbreite von α₂. Dies kann genutzt werden, um den Detektionsbereich weiter zu vergrößern, z.B. für die Nahfelderkennung bei geringer Fahrgeschwindigkeit des Kraftfahrzeugs.

Da die Stützelemente 4 elektronisch angesteuert werden können, lassen sich auch Strahlungsverfahren realisieren, bei welchen der Detektionsbereich durch sequentielle Veränderung der Strahlhalbwertsbreite α₁ bzw. α₂ erweitert bzw. verengt wird, wodurch auch Objekte außerhalb eines bestimmten Standard-Detektionsbereichs detektiert werden können. Durch zyklisches Verändern der Fokuslänge läßt sich eine Folge unterschiedlicher Detektionsbereiche realisieren, wodurch z.B. zwischen einem "Weitwinkelblick" und einem "Fernblick" hin- und hergeschaltet werden kann.

Besonders vorteilhaft ist die erfindungsgemäße Vorrichtung in einem Radar-Richtstrahlsystem zur Abstands- und/oder Geschwindigkeitsmessung in einem Kraftfahrzeug.

## Patentansprüche

1. Vorrichtung zum Einstellen der Hauptstrahlrichtung und/oder des Öffnungswinkels α eines Richtstrahlsystems mit mindestens einer auf einer Basis (1) stehenden Strahlquelle (2) und einen im Abstand dazu stehenden fokussierenden Mittel (20), wobei die Basis an einem Träger (10) des Richtstrahlsystems fixiert ist,
**dadurch gekennzeichnet, dass**
die Vorrichtung mindestens drei Stützelemente (4) aufweist, die der Fixierung der Basis (1) an dem Träger (10) dienen, und dass zum Verändern des Abstandes der mindestens einen Strahlquelle (2) von dem fokussierenden Mittel (20) und/oder der Ausrichtung der mindestens einen Strahlquelle (2) im Verhältnis zu dem fokussierenden Mittel (20) die mindestens drei Stützelemente (4) selektiv und unabhängig voneinander in ihrer jeweiligen Länge veränderbar sind, so dass die Fokuslänge (f1,f2) gezielt verändert wird und/oder die Basis (1) räumlich relativ zur Antennenlinsenachse (6) verschwenkt wird.

2. Vorrichtung gemäß Anspruch 1, **dadurch gekennzeichnet, daß** die mindestens drei Stützelemente (4) äquidistant auf einem Kreis (5) auf einer Innenseite (11) des Trägers (10) zueinander angeordnet sind und der Kreismittelpunkt auf der Symmetrieachse (6) des fokussierenden Mittels (20) liegt.

3. Vorrichtung gemäß Anspruch 1 oder 2, **dadurch gekennzeichnet, daß** der Träger (10) ein im wesentlichen geschlossenes Gehäuse ist.

4. Vorrichtung gemäß einem der vorherigen Ansprüche, **dadurch gekennzeichnet, daß** die mindestens drei Stützelemente (4) von außerhalb des Trägers (10) verstellbar sind.

5. Vorrichtung gemäß einem der vorherigen Ansprüche, **dadurch gekennzeichnet, daß** die mindestens drei Stützelemente (4) durch Piezo-Elemente, elektrische Linearmotoren und/oder mittels Schrittmotoren angetriebene Zahnstangenelemente ausgebildet sind.

6. Vorrichtung gemäß einem der vorherigen Ansprüche, **dadurch gekennzeichnet, daß** die mindestens drei Stützelemente (4) jeweils elektronisch steuerbar sind.

7. Vorrichtung gemäß einem der vorherigen Ansprüche, **dadurch gekennzeichnet, daß** die Basis (1) durch eine flexible Leitung (7) mit dem Träger (10) verbunden ist.

8. Vorrichtung gemäß einem der vorherigen Ansprüche, **dadurch gekennzeichnet, daß** der Öffnungswinkel (α₁, α₂) des Richtstrahlsystems durch gleiche und gleichgerichtete Längenänderung aller Stützelemente (4) verändert werden kann.

9. Vorrichtung gemäß einem der vorherigen Ansprüche, **dadurch gekennzeichnet, daß** die Hauptstrahlrichtung (6') des Richtstrahlsystems durch unterschiedliche Längenänderung aller Stützelemente (4) verändert werden kann.

10. Richtstrahlsystem mit einer Vorrichtung gemäß einem der vorherigen Ansprüche.

11. Richtstrahlsystem gemäß Anspruch 10, **dadurch gekennzeichnet, daß** am Träger (10) ein fokussierendes Mittel (20) angeordnet ist.

12. Richtstrahlsystem gemäß Anspruch 10 oder 11, **dadurch gekennzeichnet, daß** es zur Abstands- und/oder Geschwindigkeitsmessung in einem Kraftfahrzeug ausgestaltet ist.

13. Radarsystem, insbesondere ein Abstandssensor für ein Kraftfahrzeug, mit einer Vorrichtung gemäß einem der Ansprüche 1 bis 9.

14. Radarverfahren, insbesondere für Straßenfahrzeuge, zur sequentiellen Veränderung des Erfassungsbereiches eines Richtstrahlsystems mit einer Vorrichtung nach Anspruch 1,
**dadurch gekennzeichnet dass**
die sequentielle Änderung durch Verändern des Abstandes dem mindestens einer Strahlquelle des Radarstrahlsystems von dem fokussierenden Mittel des Radarstrahlsystems vorgesehen wird, wobei das Verändern des Abstands das selektive und unabhängig Verändern der jeweiligen Länge von den mindestens drei Stützelementen umfasst, welche die Strahlquelle tragen.

## Claims

1. Device for setting the main radiation direction and/or the angle of aperture α of a directional radiation system having at least one radiation source (2) which is located on a base (1), and a focusing means (20) which is at a distance therefrom, wherein the base is secured to a carrier (10) of the directional radiation system, **characterized in that** the device has at least three support elements (4) which serve to secure the base (1) on the carrier (10), and **in that**, in order to change the distance between the at least one radiation source (2) and the focusing means (20) and/or the orientation of the at least one radiation source (2) in relation to the focusing means (20), the at least three support elements (4) can be varied in terms of their respective length selectively and independently of one another with the result that the focal length (f1, f2) is changed selectively and/or the base (1) is pivoted spatially with respect to the axis (6) of the antenna lens.

2. Device according to Claim 1, **characterized in that** the at least three support elements (4) are arranged equidistantly to one another on a circle (5) on an inner side (11) of the carrier (10), and the centre point of the circle lies on the axis (6) of symmetry of the focusing means (20).

3. Device according to Claim 1 or 2, **characterized in that** the carrier (10) is an essentially closed housing.

4. Device according to one of the preceding claims, **characterized in that** the at least three support elements (4) can be adjusted from outside the carrier (10).

5. Device according to one of the preceding claims, **characterized in that** the at least three support elements (4) are formed by piezo elements, electric linear motors and/or toothed rack elements driven by means of stepping motors.

6. Device according to one of the preceding claims, **characterized in that** the at least three support elements (4) can each be controlled electronically.

7. Device according to one of the preceding claims, **characterized in that** the base (1) is connected to the carrier (10) by means of a flexible line (7).

8. Device according to one of the preceding claims, **characterized in that** the angle of aperture (α₁, α₂) of the directional radiation system can be changed by identical changes to the length of all the support elements (4) in the same direction.

9. Device according to one of the preceding claims, **characterized in that** the main radiation direction (6') of the directional radiation system can be changed by different changes to the length of all the support elements (4).

10. Directional radiation system having a device according to one of the preceding claims.

11. Directional radiation system according to Claim 10, **characterized in that** a focusing means (20) is arranged on the carrier (10).

12. Directional radiation system according to Claim 10 or 11, **characterized in that** it is configured to measure inter-vehicle distance and/or velocity in a motor vehicle.

13. Radar system, in particular an inter-vehicle distance sensor for a motor vehicle, having a device according to one of Claims 1 to 9.

14. Radar method, in particular for road vehicles, for sequentially changing the coverage area of a directional radiation system having a device according to Claim 1, **characterized in that** there is provision for the sequential change to be performed by changing the distance of the at least one radiation source of the radar beam system from the focusing means of the radar beam system, wherein the changing of the distance comprises selectively and independently changing the respective length of the at least three support elements which support the radiation source.

## Revendications

1. Dispositif pour régler la direction principale d'un faisceau et/ou l'angle d'ouverture α d'un système de faisceau directionnel comportant au moins une source de faisceau (2) appuyée sur une embase (1) et un moyen de focalisation (20 ) à distance de la source, l'embase étant fixée sur un support (10) du système de faisceau directionnel,
**caractérisé en ce que**
le dispositif comporte au moins trois éléments d'appui (4) qui servent à fixer l'embase (1) au support (10), et
pour modifier la distance entre au moins une source de faisceau (2) et le moyen de focalisation (20) et/ou l'alignement d'au moins une source de faisceau (2) par rapport au moyen de focalisation (20), la longueur respective au moins des trois éléments d'appui (4) peut être modifiée sélectivement et indépendamment l'une de l'autre de sorte que la distance focale (f1, f2) puisse être modifiée de manière ciblée et/ou que l'embase (1) puisse être basculée dans l'espace par rapport à l'axe (6) de la lentille de l'antenne.

2. Dispositif selon la revendication 1,
**caractérisé en ce qu'**
au moins trois éléments d'appui (4) sont disposés de manière équidistante sur un cercle (5) sur le côté intérieur (11) du support (10) et le centre du cercle se situe sur l'axe de symétrie (6) du moyen de focalisation (20).

3. Dispositif selon la revendication 1 ou 2,
**caractérisé en ce que**
le support (10) est un boîtier pratiquement fermé.

4. Dispositif selon l'une des revendications précédentes,
**caractérisé en ce qu'**
au moins trois éléments d'appui (4) sont réglables en dehors du support (10).

5. Dispositif selon l'une des revendications précédentes,
**caractérisé en ce qu'**
au moins trois éléments d'appui (4) sont constitués par des éléments piézo-électriques, des moteurs électriques linéaires et/ou des éléments à crémaillère entraînés par des moteurs pas à pas.

6. Dispositif selon l'une des revendications précédentes,
**caractérisé en ce qu'**
au moins trois éléments d'appui (4) peuvent être commandés respectivement de manière électronique.

7. Dispositif selon l'une des revendications précédentes,
**caractérisé en ce que**
l'embase (1) est reliée au support (10) par un conducteur souple (7).

8. Dispositif selon l'une des revendications précédentes,
**caractérisé en ce que**
l'angle d'ouverture (α₁, α₂) du système de faisceau dirigé peut être modifié par des variations de longueurs identiques ou de même sens de tous les éléments d'appui (4).

9. Dispositif selon l'une des revendications précédentes,
**caractérisé en ce que**
la direction principale du faisceau (6') du système de faisceau directionnel est modifiée par des variations différentes de longueur de tous les éléments d'appui (4).

10. Système de faisceau directionnel comportant un dispositif selon l'une des revendications précédentes.

11. Système de faisceau directionnel selon la revendication 10,
**caractérisé en ce que**
le support (10) comporte un moyen de focalisation (20).

12. Système de faisceau directionnel selon les revendications 10 ou 11,
**caractérisé en ce qu'**
il est conçu pour une mesure de distance et/ou de vitesse équipant un véhicule automobile.

13. Système radar notamment capteur de distance pour un véhicule automobile comportant un dispositif selon l'une des revendications 1 à 9.

14. Procédé de radar notamment pour des véhicules routiers, afin de modifier de manière séquentielle la plage de saisie d'un système de faisceau directionnel comportant un dispositif selon la revendication 1,
**caractérisé en ce que**
la modification séquentielle est assurée par modification de la distance d'au moins une source de faisceau du système de faisceau radar par rapport au moyen de focalisation du système de faisceau radar, la modification de la distance comprenant la modification sélective et indépendante de la longueur respective d'au moins trois éléments d'appui portant la source de faisceau.
